# EUROPÄISCHE PATENTSCHRIFT

(11) **EP 3 707 786 B1**
(45) Veröffentlichungstag und Bekanntmachung des Hinweises auf die Patenterteilung: **23.08.2023**
(21) Anmeldenummer: 18803373.2
(22) Anmeldetag: 08.11.2018
(51) Int. Cl.: H01S 3/00, H01S 3/02, H01S 3/106, H01S 3/109, H01S 3/08, G02F 1/35, H01S 3/11

(54) **VORRICHTUNG ZUR ERZEUGUNG EINER LASERSTRAHLUNG**
DEVICE FOR GENERATING LASER RADIATION
DISPOSITIF POUR LA GÉNÉRATION D'UN RAYONNEMENT LASER

(30) Priorität: 09.11.2017 DE 102017126291
(43) Veröffentlichungstag der Anmeldung: 16.09.2020
(73) Patentinhaber: Compact Laser Solutions GmbH, 12277 Berlin (DE)
(72) Erfinder: KUNTZE, Andreas, 14195 Berlin (DE)
(74) Vertreter: Dantz, Dirk
(86) Internationale Anmeldenummer: PCT/EP2018/080599
(87) Internationale Veröffentlichungsnummer: WO 2019/092097

(56) Entgegenhaltungen:
- DE-A1-102014 218 353
- JP-A- 2006 317 724
- US-A1- 2002 027 932
- US-A1- 2005 068 998

## Beschreibung

Die Erfindung betrifft eine Vorrichtung zum Erzeugen einer Laserstrahlung mit einen Resonator, einer optischen Baugruppe und einer Verstellvorrichtung, die geeignet ist die relative Position der optischen Baugruppe von einer ersten Position zu einer anderen Position zum Resonator zu verändern, sowie ein Verfahren zur Verbesserung der Lebensdauer der Vorrichtung hierzu.

Hochenergetische UV-Laser werden in Wissenschaft und Technik verbreitet eingesetzt, wie z.B. für Mikromaterialbearbeitung, Markierungen, Halbleiterbearbeitungen Solarzellherstellung Strukturierung von ITO- und TCO-Schichten, Glas- und Keramikbearbeitung und vieles mehr. Optische Bauelemente wie Spiegel, Prismen, Gitter, aber auch optisch nichtlineare Kristalle zur Erzeugung der höheren Harmonischen, die der intensiven energiereichen Laserstrahlung ausgesetzt sind, unterliegen einer Degradation der verwendeten Materialien und damit einer Herabsetzung ihrer optischen Eigenschaften. Zum einen können Schmutzpartikel auf den Bauteilen einbrennen bei Spiegeln den Reflexionsgrad vermindern oder gänzlich zerstören. Zum anderen können die Oberflächen der optisch nichtlinearen Kristalle chemisch so verändert werden, dass eine effektive Konversion der primären Laserstrahlung nicht mehr vorhanden ist. Die Folge ist eine verminderte Leistungsfähigkeit des Lasers. Diese Herabsetzung der Leistungsfähigkeit der optischen Bauelemente ist im Wesentlichen auf den Durchmesser des Laserstrahles beschränkt, der üblicherweise zwischen 1 µm und 1000 µm beträgt. In der Technik existieren Verfahren, um die Lebensdauer der optischen Bauelemente zu erhöhen und damit die Leistungsfähigkeit des Lasersystems zu erhalten.

Die Patentschrift US 8,885,246 B2 stellt eine Vorrichtung vor, mit der optische Bauelemente eines oder mehrerer planparalleler optischer Platten gedreht bzw. rotiert werden, damit in dem optisch nichtlinearen Kristall andere nicht in ihrer Leistung herabgesetzte Bereiche vom Laser durchstrahlt werden. US 5825562 beschreibt ein mechanisches System, mit dem ein optisches Bauelement über einen Motor so kontinuierlich rotiert wird, dass das optische Bauelement einer rotierenden Spiralbahn folgt. Diese Bewegungen können über ein Computerprogramm gesteuert werden, wie z.B. in US 6859335 B1 beschrieben.

Die hier vorgestellten Methoden weisen Nachteile auf. Es kann jeweils nur ein optisches Bauelement verstellt werden. Um die Lebensdauer mehrerer Bauelemente zu erhöhen, muss die Verstellvorrichtung an jedem optischen Bauelement angebracht werden. Häufig ist es wünschenswert, die optischen Bauelemente in einem schützenden Gehäuse unterzubringen und die im Gehäuse verbliebene Luft zu evakuieren oder mit gereinigter Luft oder Gasen zu spülen, um z.B. die Lebensdauer vermindernden Ausgasungsprodukte aus anderen Bauteilen und Schmutzpartikel von dem optischen System zu reduzieren. Die für die Verstellvorrichtung nötige Mechanik ist dann ebenfalls in dem Gehäuse untergebracht, kann ausgasen und die optischen Bauelemente kontaminieren. Dies ist insbesondere für die Lebensdauer von Lasersystemen wichtig, die im UV-Bereich und angrenzenden Wellenlängen arbeiten. Außerdem muss die Verstellvorrichtung an und mit jedem optischen Bauelement justiert werden. Die hier vorgestellten Methoden zur Verlängerung der Lebensdauer von optischen Bauelementen in einem Lasersystem sind ebenfalls aufwändig in Anbringung und Betrieb und damit kostenintensiv.

Ferner wird auf DE 10 2014 218353 A1 hingewiesen. Diese Offenlegungsschrift offenbart eine Vorrichtung zum Erzeugen einer Laserstrahlung mit einem Resonator, einer optischen Baugruppe und einer Verstellvorrichtung, wobei die optische Baugruppe mehrere optische Bauelemente umfasst, wobei die optische Baugruppe ein beweglich angeordnetes Trägerelement umfasst, auf dem die optischen Bauelemente angeordnet sind, wobei ein optisches Bauelement eine Vorrichtung zur Ablenkung der Laserstrahlung ist, wobei die Vorrichtung zur Ablenkung der Laserstrahlung der optischen Baugruppe im Strahlengang der vom Resonator erzeugten Laserstrahlung angeordnet ist, wobei die Verstellvorrichtung geeignet ist die relative Position der optischen Baugruppe von einer ersten Position zu einer anderen oder eine Anzahl von anderen Positionen zum Resonator zu verändern, wobei die Position des Strahlenganges der aus der optischen Baugruppe in der ersten Position austretenden Laserstrahlung durch die Verstellung der optischen Baugruppe zu einer der anderen Positionen zum Resonator unverändert bleibt.

Es ist daher Aufgabe der vorliegenden Erfindung, eine Verstellvorrichtung bereitzustellen, die zu einer erhöhten Lebensdauer des Systems führt und in ihrer Bauweise kompakter, damit kostengünstiger und leichter zu handhaben ist als bisher bekannte Lösungen.

Die erfindungsgemäße Aufgabe wird durch eine Vorrichtung gemäß Anspruch 1 gelöst.

Die erfindungsgemäße Vorrichtung zur Erzeugung einer Laserstrahlung umfasst den Resonator, der die primäre Laserstrahlung erzeugt, eine optische Baugruppe sowie eine Verstellvorrichtung. Die optischen Bauelemente sind in einer optischen Baugruppe räumlich zusammengefasst. Die optische Baugruppe weist optische Bauelemente auf, welche eine Vorrichtung zur Frequenzkonversion und eine erste und eine zweite Vorrichtung umfassen, wobei die erste und zweite Vorrichtung zur Ablenkung der Laserstrahlung angeordnet sind. Die Vorrichtungen zur Ablenkung der Laserstrahlung umfassen Spiegel, Linse, Prismen, Gitter und deren Kombinationen, die in einer Vorrichtung so angeordnet sind, dass sie den Laserstrahl ablenken und daher im Strahlengang der vom Resonator erzeugten Laserstrahlung liegen. Optional kann die optische Baugruppe in einer luftdichten Kammer angeordnet sein. Die optische Baugruppe umfasst außerdem ein beweglich angeordnetes Trägerelement, auf dem die Vorrichtung zur Ablenkung der Laserstrahlung angebracht ist. Über die Verstellvorrichtung wird die Position der optischen Baugruppe relativ zum Resonator derart verändert, dass die Position und Richtung des Strahlenganges bei Austritt des Laserstrahls aus der optischen Baugruppe durch die Verstellung der Position der optischen Baugruppe nicht verändert wird.

Optische Bauelemente können während des Betriebs einem Veränderungs- und/oder Alterungsprozess unterliegen. Dieser Alterungsprozess ist von der Verschmutzung selbst von kleinsten Partikeln und auch von der Energie bzw. Wellenlänge der verwendeten Laserstrahlung abhängig und führt zu Intensitätsverlusten der Laserstrahlung. Neben den Partikel, die sich auf den optischen Bauelementen absetzen können, besteht auch die Möglichkeit, dass Aromate, Substanzen und Stoffe, die insbesondere durch UV-Strahlung gegebenenfalls auch noch chemisch verändert werden können, aus den in der Vorrichtung zur Erzeugung einer Laserstrahlung verbauten Elementen ausgasen und sich auf den optischen Bauelementen niederschlagen. Diese können dann durch die Laserstrahlung auf den optischen Bauelementen verdampft und/oder eingebrannt werden oder sie beeinträchtigen die Reflexion oder Absorption die Leistungsfähigkeit der Vorrichtung. Zudem können Mikrodefekte in den Kristallen durch die Laserstrahlung zu Kristalldefekten führen. Weiterhin kann es auch durch Solarisation/Farbzentren oder anderen Schädigungen zu Leistungseinbußen infolge lokaler Degradation der optischen Bauelemente kommen. Durch die Verstellung der optischen Baugruppe wird erreicht, dass der Laserstrahl auf anderen Stellen der optischen Bauelemente auftrifft und so die Intensität der Laserstrahlung auch über einen langen Zeitraum erhalten bleibt. Und damit die Lebensdauer der optischen Elemente verlängert wird. Die gesamte auf dem Trägerelement angeordnete optische Baugruppe wird verstellt, eine Verstellung einzelner optischer Bauelemente ist nicht notwendig, wie sie aus dem Stand der Technik bekannt ist. Allerdings ist es denkbar, dass die optische Baugruppe nur ein optisches Bauelement aufweist. Die vorgestellte erfindungsgemäße Verstellvorrichtung ist daher in ihrer Bauweise kostengünstiger, kompakter und leichter zu handhaben. Die Verstellung kann im einfachsten Fall von Hand erfolgen, ein motorischer Antrieb ist nicht notwendig, kann aber bei Bedarf einfach nachgerüstet werden. Eine Justage der optischen Bauelemente vor dem Einbau der Verstellvorrichtung erübrigt sich ebenfalls, da die optischen Bauelemente innerhalb der optischen Baugruppe bereits justiert sind. Die optische Baugruppe kann außerdem in einem staubgeschützten Gehäuse mit optischen Auskoppelfenstern für den Laserstrahl untergebracht werden, in dem die optischen Bauelemente vor externen Verschmutzungen geschützt sind.

Weiterführende Ausbildungen der Erfindung zur Vorrichtung sind in den Unteransprüchen 2 bis 5 dargelegt.

Die optische Baugruppe ist derart ausgeführt, dass sie eine Vorrichtung zur Frequenzkonversion der Laserstrahlung umfasst. Um Laserstrahlung im UV-Bereich zu erzeugen, wird üblicherweise der Laserstrahl in einen nichtlinearen Kristall, z.B. LBO, BBO, KTP usw. mit hohen Leistungsdichten eingebracht. Durch die hohe Intensität der Laserstrahlung in einem kleinen Bereich (Strahldurchmesser üblicherweise ca. 1 µm bis 1000 µm) kann der nichtlineare Kristall im Bereich der Wirkfläche des Laserstrahls irreversibel verändert und in seiner Wirkungsweise stark beeinträchtigt werden. Über die Verstellvorrichtung der optischen Baugruppe wird die Vorrichtung zur Frequenzkonversion um einen Betrag so verstellt, dass der Laserstrahl durch einen unbeschädigten Bereich der Vorrichtung zur Frequenzvervielfachung geleitet wird, ohne dass die Position des Strahlenganges verändert wird.

Die Verstellvorrichtung der optischen Baugruppe ist so gestaltet, dass über die Verstellvorrichtung die relative Position der optischen Baugruppe zum Resonator aus einer ersten Position zu einer Mehrzahl von anderen Positionen verstellbar ist, ohne dass die Position des Strahlenganges verändert wird. Diese Ausbildung erhöht die Lebensdauer der optischen Baugruppe enorm. Auf diese Weise kann auf dem optischen Bauelement, z.B. einem nichtlinearen Kristall, eine beliebige unbeschädigte Stelle ausgewählt und im Strahlengang des Lasersystems angeordnet werden.

Bei einer typischen angenommenen Stirnfläche von beispielsweise 3x3 mm und einem angenommenen Durchmesser des Laserstrahls von 100 µm können also mehr als 100 Bereiche vom Laserstrahl einer nach dem anderen durchstrahlt werden ohne signifikante Leistungseinbußen des Laserstrahls.

Um den Strahlengang des Laserstrahles nicht zu verändern, kann die Verstellvorrichtung die optische Baugruppe nur entlang definierter Richtungen translatieren. In einer weiteren Ausbildung der Erfindung ist daher die Verstellvorrichtung derart ausgeführt, dass die Verstellung der optischen Baugruppe parallel zur Oberfläche der Vorrichtung zur Ablenkung der Laserstrahlung erfolgt. Besteht die optische Baugruppe aus z.B. einem Spiegel, erfolgt die Verstellung parallel zur Spiegeloberfläche.

In einer weiteren Ausgestaltung der Erfindung ist die Verstellvorrichtung derart ausgeführt, dass die Verstellung der optischen Baugruppe senkrecht zur Strahlebene der Vorrichtung zur Ablenkung der Laserstrahlung erfolgt. Besteht die optische Baugruppe aus z.B. einem Spiegel, erfolgt die Verstellung so senkrecht zur Strahlebene, dass sich die Position der Auftrefffläche des Laserstrahles auf dem Spiegel ändert, die Position des Strahlenganges aber nicht verändert wird.

In einer weiteren Ausführung der Erfindung ist die Verstellvorrichtung derart gestaltet, dass die Verstellung der optischen Baugruppe parallel zur Strahlebene der Vorrichtung zur Ablenkung der Laserstrahlung erfolgt. Durch Kombination der Verstellung der optischen Baugruppe senkrecht und parallel zur Strahlebene kann über die Verstellvorrichtung die optische Baugruppe dreidimensional also in allen drei Raumachsen verstellt werden und so unbeschädigte Bereiche auf den optischen Bauelementen in den Strahlengang des Laserstrahls verstellt werden, ohne die Position des Strahlenganges zu verändern. Eine deutliche Erhöhung der Lebensdauer der optischen Bauelemente wird damit erzielt.

Gemäß vorliegender Erfindung umfasst die optische Baugruppe eine zweite Vorrichtung zur Ablenkung der Laserstrahlung. Die erste Vorrichtung und der zweite Vorrichtung umfassen Spiegel, Linsen, Prismen, Gitter und deren Kombinationen. Die optische Baugruppe ist auf dem beweglichen Trägerelement angeordnet, das über die Verstellvorrichtung gegenüber dem im Resonator erzeugten Laserstrahl beweglich ausgeführt ist. So kann eine Verstellung der optischen Baugruppe erfolgen, ohne dass die Position des Strahlenganges verändert wird. Auf diese Weise wird für jede Kombination der optischen Bauelemente eine größere Lebensdauer der optischen Bauelemente erreicht. Die optischen Bauelemente können in beliebiger Winkelstellung zueinander und auch zur Laserstrahlung angeordnet sein.

In einer weiteren Ausgestaltung der Erfindung sind die die Laserstrahlung ablenkenden Oberflächen der zwei Vorrichtungen zur Ablenkung der Laserstrahlung parallel angeordnet. Der Laserstrahl tritt parallel zum vom Resonator erzeugten Laserstrahl aus der optischen Baugruppe um einen Betrag seitlich versetzt aus. Über die Verstellvorrichtung wird die optische Baugruppe mit den zwei Vorrichtungen zur Ablenkung der Laserstrahlung verstellt, ohne dass die Position des Strahlenganges verändert wird.

In einer weiteren Ausführung der Erfindung ist die Verstellvorrichtung derart ausgebildet, dass die Verstellung der optischen Baugruppe parallel zur Strahlebene der Laserstrahlung erfolgt. Besteht die optische Baugruppe aus z.B. zwei parallel angeordneten Spiegeln, wird die optische Baugruppe entlang des vom Resonator einfallenden Laserstrahles verstellt. Diese Translationsbewegung verändert nicht die Position des Strahlenganges.

In einer weiteren Ausgestaltung der Erfindung ist die Verstellvorrichtung derart ausgeführt, dass die Verstellung der optischen Baugruppe senkrecht zur Oberfläche der zweiten Vorrichtung zur Ablenkung der Strahlung erfolgt.

Besteht die optische Baugruppe aus z.B. zwei parallel angeordneten Spiegeln, wird die optische Baugruppe senkrecht zur Oberfläche des zweiten im Strahlengang des Lasers befindlichen Spiegels bewegt, damit die Position des Strahlenganges nicht geändert wird. In dieser Anordnung kann die lineare Verstellung in allen Raumrichtungen erfolgen, ohne dass die Position des austretenden Laserstrahls verändert wird.

In einer weiteren Ausbildung der Erfindung ist die Verstellvorrichtung derart ausgeführt, dass die Verstellung der optischen Baugruppe senkrecht zum Strahlengang der in die optische Baugruppe eintretenden Laserstrahlung erfolgt. Besteht die optische Baugruppe aus z.B. zwei parallel angeordneten Spiegeln, wird die optische Baugruppe senkrecht zum Strahlengang des einfallenden Laserstrahles bewegt und die Position des Strahlenganges nicht geändert.

Die erfindungsgemäße Aufgabe wird weiterhin durch ein Verfahren gemäß Anspruch 6 gelöst.

Bei dem erfindungsgemäßen Verfahren zur Verbesserung der Lebensdauer einer Vorrichtung zur Erzeugung einer Laserstrahlung wird eine optische Baugruppe relativ zum Resonator von einer ersten in eine zweite Position bewegt. Die optische Baugruppe ist auf einem beweglich angeordneten Trägerelement befestigt. Durch die Bewegung wird die Position der Auftrefffläche der Laserstrahlung auf den optischen Bauelementen verändert. Über die Verstellvorrichtung wird die Position der optischen Baugruppe relativ zum Resonator derart verändert, dass die Position des Strahlenganges durch die Verstellung der Position der optischen Baugruppe nicht verändert wird. Durch die Verstellung der optischen Baugruppe ist eine Verstellung einzelner optischer Bauelemente nicht notwendig. Die erfindungsgemäße Verstellvorrichtung ist daher in ihrer Bauweise, kompakter aufgebaut, kostengünstiger herzustellen und leichter zu handhaben als bekannte Lösungen aus dem Stand der Technik. Die Verstellung kann von Hand erfolgen, ein motorischer Antrieb kann einfach nachgerüstet werden. Eine Justage der optischen Bauelemente vor dem Einbau der Verstellvorrichtung ist überflüssig. Weiterhin wird auch die Lebensdauer der verwendeten optischen Bauelemente verlängert, da die Position des auftreffenden Laserstrahls durch die veränderte Position der auf dem Trägerelement angeordneten optischen Bauelemente verändert wird.

Weiterführende Ausbildungen der Erfindung zum Verfahren sind in den Unteransprüchen 7 und 8 dargelegt.

Das Verfahren zur Verbesserung der Lebensdauer einer Vorrichtung zur Erzeugung einer Laserstrahlung ist in einer weiteren Ausgestaltung der Erfindung so ausgeführt, dass die optische Baugruppe relativ zum Resonator aus einer ersten Position in weitere Positionen verstellt wird, ohne dass die Position des Strahlenganges verändert wird. Diese Ausbildung erhöht die Lebensdauer der optischen Baugruppe um ein Vielfaches. Auf diese Weise kann auf dem optischen Bauelement eine beliebige unbeschädigte Stelle gesucht und in den Strahlengang des Lasersystems positioniert werden.

Gemäß der Erfindung ist das Verfahren zur Verbesserung der Lebensdauer einer Vorrichtung zur Erzeugung einer Laserstrahlung derart ausgeführt, dass sie eine Vorrichtung zur Frequenzkonversion der Laserstrahlung umfasst. Um Laserstrahlung im UV-Bereich zu erzeugen, wird üblicherweise der Laserstrahl in einen nichtlinearen Kristall fokussiert. Durch die hohe Intensität der Laserstrahlung in einem kleinen Bereich (Strahldurchmesser üblicherweise ca. 1 µm bis 1000 µm) kann der nichtlineare Kristall im Bereich der Auftrefffläche des Laserstrahls irreversibel verändert und in seiner Wirkungsweise stark beeinträchtigt werden. Über die Verstellvorrichtung der optischen Baugruppe wird die Vorrichtung zur Frequenzkonversion um einen Betrag so verstellt, dass der Laserstrahl durch einen unbeschädigten Bereich der Vorrichtung zur Frequenzkonversion geleitet wird, ohne dass die Position des Strahlenganges verändert wird.

In einer weiteren Ausbildung der Erfindung ist das Verfahren zur Verbesserung der Lebensdauer einer Vorrichtung zur Erzeugung einer Laserstrahlung derart ausgeführt, dass die Verstellung der optischen Baugruppe parallel zur Oberfläche der Vorrichtung zur Ablenkung der Laserstrahlung erfolgt. Besteht die optische Baugruppe aus z.B. einem Spiegel, erfolgt die Verstellung parallel zur Spiegeloberfläche, ohne die Position des Strahlenganges zu verändern.

In einer weiteren Ausführung der Erfindung ist das Verfahren zur Verbesserung der Lebensdauer einer Vorrichtung zur Erzeugung einer Laserstrahlung derart ausgebildet, dass die Verstellung der optischen Baugruppe senkrecht zur Strahlebene der Vorrichtung zur Ablenkung der Laserstrahlung erfolgt. Besteht die optische Baugruppe aus z.B. einem Spiegel, erfolgt die Verstellung so senkrecht zur Strahlebene, dass sich die Position der Auftrefffläche des Laserstrahles auf dem Spiegel ändert, die Position des nachfolgenden Strahlenganges aber nicht verändert wird.

In einer weiteren Ausgestaltung der Erfindung ist das Verfahren zur Verbesserung der Lebensdauer einer Vorrichtung zur Erzeugung einer Laserstrahlung derart ausgeführt, dass die Verstellung der optischen Baugruppe parallel zur Strahlebene der Laserstrahlung erfolgt. Besteht die optische Baugruppe aus z.B. einem gemeinsamen Spiegel, wird die optische Baugruppe entlang des vom Resonator einfallenden Laserstrahles verstellt. Diese Translationsbewegung verändert nicht die Position des Strahlenganges. Optional kann die Bewegung auch über die Verstellung eines einzelnen Spiegels oder einer weiteren Baugruppe erfolgen.

Gemäß der Erfindung ist das Verfahren zur Verbesserung der Lebensdauer einer Vorrichtung zur Erzeugung einer Laserstrahlung derart ausgeführt, dass die optische Baugruppe eine zweite Vorrichtung zur Ablenkung der Laserstrahlung umfasst. Diese zweite Vorrichtung zur Ablenkung der Laserstrahlung wird zusammen mit der optischen Baugruppe bewegt. Die Vorrichtungen zur Ablenkung der Laserstrahlung umfassen Spiegel, Linsen, Prismen Gitter und deren Kombinationen. Die optische Baugruppe ist auf dem beweglichen Trägerelement angeordnet, das über die Verstellvorrichtung gegenüber dem im Resonator erzeugten Laserstrahl beweglich ausgeführt ist, ohne dass die Position des Strahlenganges verändert wird. Auf diese Weise wird für jede Kombination der optischen Bauelemente eine größere Lebensdauer der optischen Bauelemente erreicht.

In einer weiteren Gestaltung der Erfindung ist das Verfahren zur Verbesserung der Lebensdauer einer Vorrichtung zur Erzeugung einer Laserstrahlung derart ausgeführt, dass die Verstellung der optischen Baugruppe parallel zur Strahlebene der Laserstrahlung erfolgt. Besteht die optische Baugruppe aus z.B. zwei parallel angeordneten Spiegeln, wird die optische Baugruppe entlang des vom Resonator einfallenden Laserstrahles verstellt. Diese Translationsbewegung verändert nicht die Position des Strahlenganges.

In einer weiteren Ausführung der Erfindung ist das Verfahren zur Verbesserung der Lebensdauer einer Vorrichtung zur Erzeugung einer Laserstrahlung derart gestaltet, dass die Verstellung der optischen Baugruppe senkrecht zur Oberfläche der Vorrichtung zur Ablenkung der Strahlung erfolgt. Besteht die optische Baugruppe aus z.B. zwei parallel angeordneten Spiegeln, wird die optische Baugruppe senkrecht zur Oberfläche des zweiten im Strahlengang des Lasers befindlichen Spiegels bewegt, damit die Position des Strahlenganges nicht geändert wird.

In einer weiteren Ausführung der Erfindung ist das Verfahren zur Verbesserung der Lebensdauer einer Vorrichtung zur Erzeugung einer Laserstrahlung derart ausgebildet, dass die Verstellung der optischen Baugruppe senkrecht zum Strahlengang der in die optische Baugruppe eintretenden Laserstrahlung erfolgt. Besteht die optische Baugruppe aus z.B. zwei parallel angeordneten Spiegeln, wird die optische Baugruppe senkrecht zum Strahlengang des einfallenden Laserstrahles bewegt und die Position des Strahlenganges nicht geändert.

Ausführungsbeispiele der erfindungsgemäßen Sensorvorrichtung und des erfindungsgemäßen Verfahrens sind in den Zeichnungen schematisch vereinfacht dargestellt und werden in der nachfolgenden Beschreibung näher erläutert.

Es zeigen:

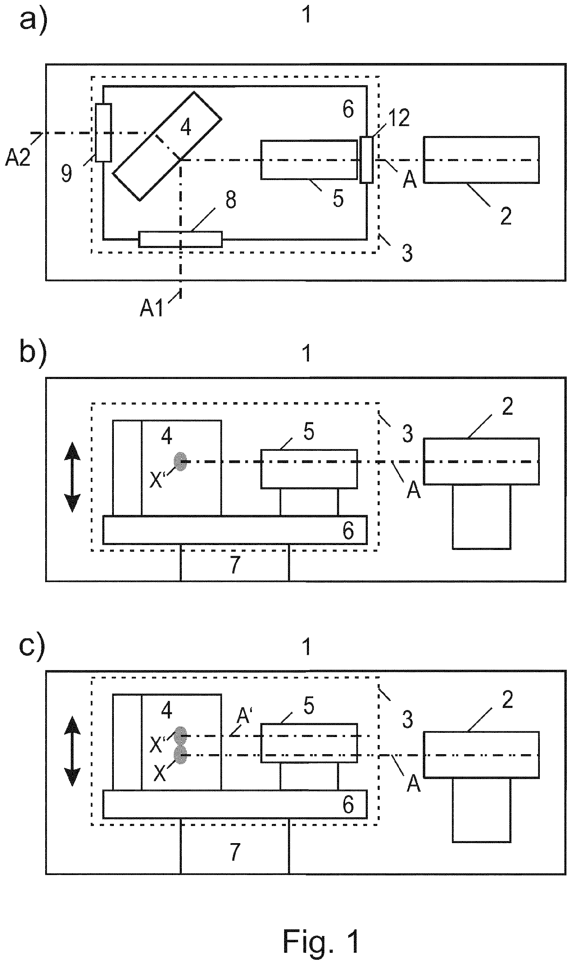

- Fig. 1 a: Draufsicht einer Vorrichtung zur Erzeugung einer Laserstrahlung mit einer optischen Baugruppe
- Fig. 1 b: Seitenansicht einer Vorrichtung zur Erzeugung einer Laserstrahlung
- Fig. 1 c: Seitenansicht einer Vorrichtung zur Erzeugung einer Laserstrahlung nach der Bewegung der optischen Baugruppe in Vertikalrichtung
- Fig. 2 a: Seitenansicht einer Vorrichtung zur Erzeugung einer Laserstrahlung

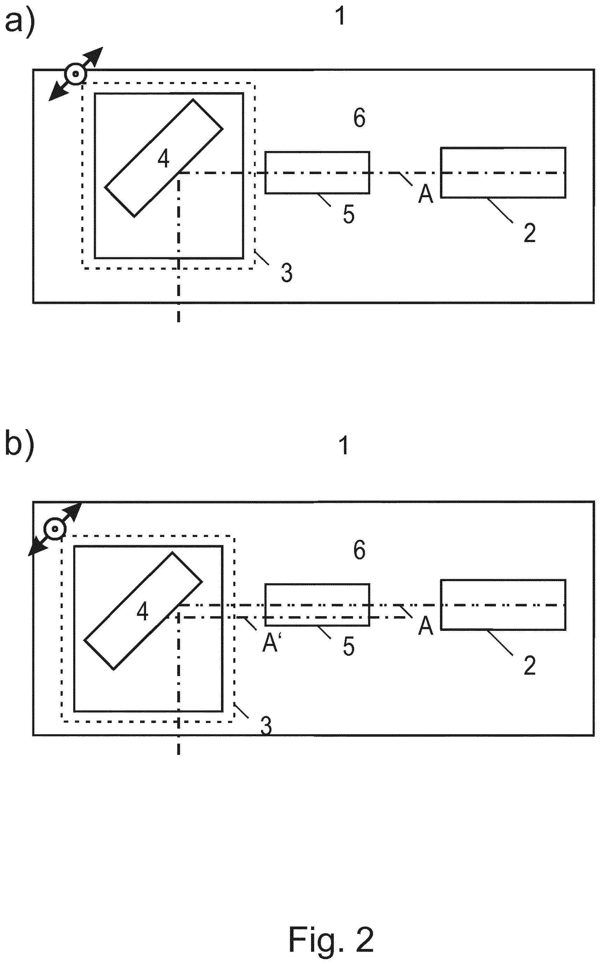

- Fig. 2 b: Seitenansicht einer Vorrichtung zur Erzeugung einer Laserstrahlung nach der Bewegung der optischen Baugruppe in Horizontalrichtung

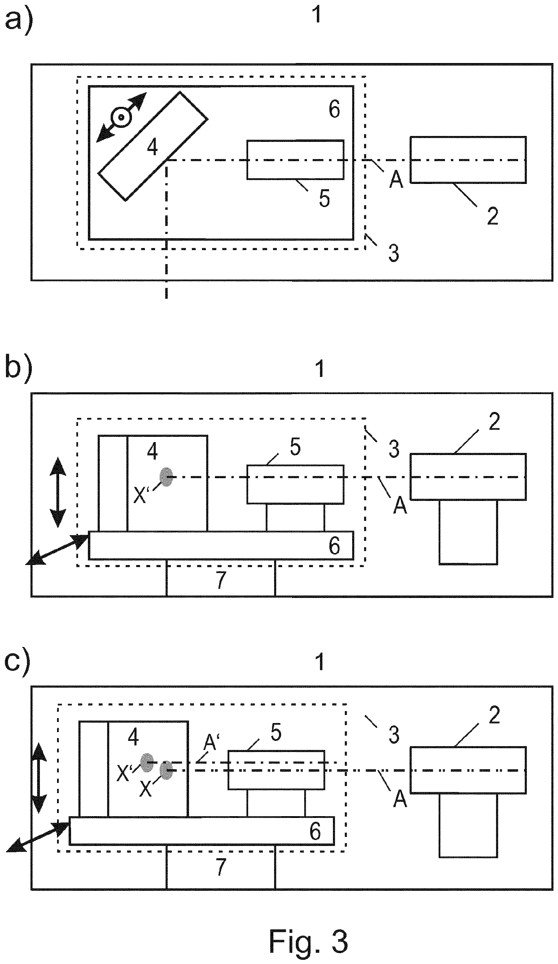

- Fig. 3 a: Draufsicht einer Vorrichtung zur Erzeugung einer Laserstrahlung mit einer optischen Baugruppe
- Fig. 3 b: Seitenansicht einer Vorrichtung zur Erzeugung einer Laserstrahlung
- Fig. 3 c: Seitenansicht einer Vorrichtung zur Erzeugung einer Laserstrahlung nach der Bewegung der optischen Baugruppe in Vertikal- und Horizontalrichtung

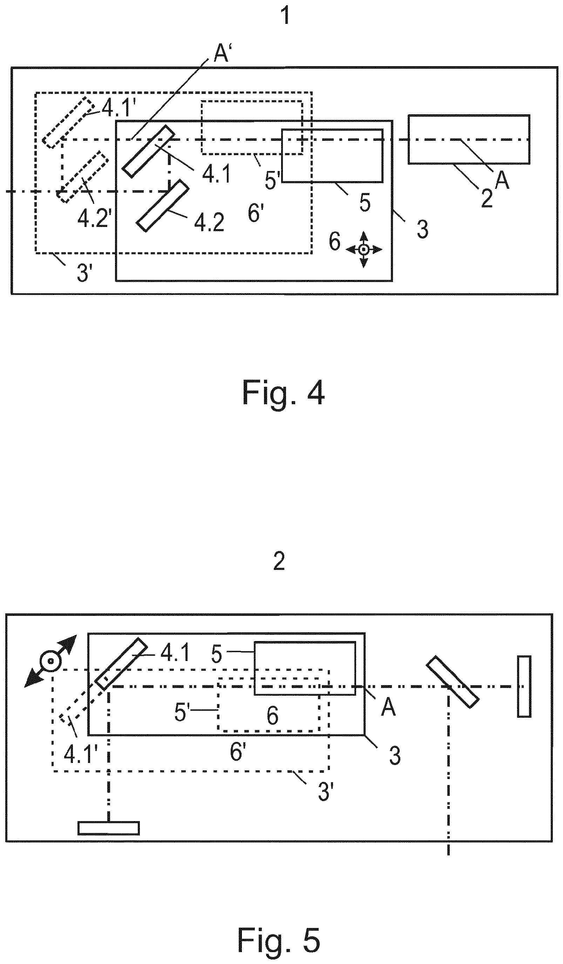

- Fig. 4 a: Ansicht einer Vorrichtung zur Erzeugung einer Laserstrahlung mit zwei Spiegeln
- Fig. 5: Ansicht einer Vorrichtung zur Erzeugung einer Laserstrahlung mit einer im Resonator angeordneten optischen Baugruppe

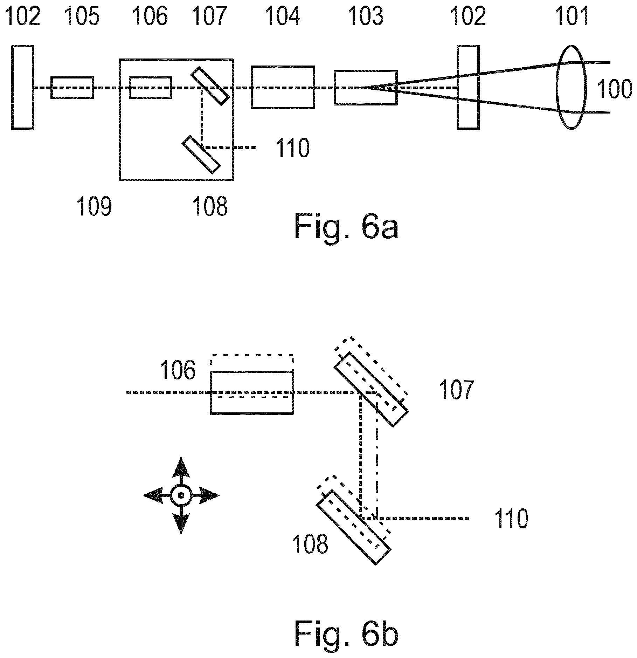

- Fig. 6a: Laserresonator mit interner verstellbarer optischer Baugruppe
- Fig. 6b: Verstellbarer optischer Baugruppe

Die in den Figuren 1 bis 3 und 5 dargestellten Vorrichtungen beziehen sich auf Ausführungsbeispiele, die für das Verständnis der vorliegenden Erfindung nützlich sind.

Die -Vorrichtung zur Erzeugung einer Laserstrahlung 1 (Fig. 1) weist einen Resonator 2, der die primäre Laserstrahlung A erzeugt, und eine optische Baugruppe 3 auf. Die optische Baugruppe 3 weist eine Vorrichtung zur Ablenkung der Laserstrahlung 4 und eine Vorrichtung zur Frequenzkonversion der Laserstrahlung 5 auf. Zudem umfasst die optische Baugruppe ein Brewster-Fenster 8 sowie ein Einkoppel-Fenster 12 und ist in einer luftdichten Kammer angeordnet. Beide Vorrichtungen 4, 5 liegen im Strahlengang der vom Resonator 2 erzeugten Laserstrahlung A. Die optische Baugruppe 3 ist fest mit einem beweglichen Trägerelement 6 verbunden und über die Verstellvorrichtung 7 in vertikaler Richtung verstellbar. In einer optionalen Ausführungsform, kann das Brewster-Fenster auch ein Anti-Reflex (AR) beschichtetes Fenster oder ein Fenster ohne AR-Beschichtung sein. Die Vorrichtung zur Ablenkung der Laserstrahlung ist in diesem Ausführungsbeispiel als hoch-transmitterender Separatorspiegel für die Wellenlängen 1064 nm und 532 nm ausgeführt. Für die Wellenlänge von 355 nm sind die Vorrichtung zur Ablenkung der Laserstrahlung 4 hochreflektierend. Während die Laserstrahlung der Wellenlänge 355 nm A1 aus dem Brewster-Fenster 8 ausgekoppelt wird, wird die Laserstrahlung A2 mit den Wellenlängen 1064 nm und 532 nm aus dem Auskoppel-Fenster 9 ausgekoppelt.

Üblicherweise erzeugt ein Festkörperlaser wie z.B. ein neodymdotierter Laserktristall die primäre Laserstrahlung A. Möglich sind aber auch Diodenlaser, Gas- bzw. Excimerlaser. Generell ist jeder Laser zur Erzeugung einer Primärstrahlung geeignet. Zur Vervielfachung der Frequenz der primären Laserstrahlung sind nichtlineare Kristalle wie LBO, BBO, KTP usw. zur Erzeugung der zweiten bzw. dritten Harmonischen in Gebrauch.

Besonders Wellenlängen im sichtbaren grünen Wellenlängenbereich bzw. im UV-Bereich sind technisch interessant. Die Vorrichtung zur Ablenkung der Laserstrahlung 4 besteht aus einem Spiegel oder Kombinationen von Spiegeln, Gitter, Linsen bzw. Prismen, die den primären Laserstrahl A in eine Richtung ablenken.

Solche Vorrichtungen sind Alterungsprozessen unterworfen, die primär von der Verschmutzung der optischen Elemente und der Energie der verwendeten Laserstrahlung abhängen. Der sich auf den optischen Bauelementen niedergeschlagene Partikel wird durch die energiereiche Laserstrahlung verbrannt und kann hierdurch die Oberfläche der optischen Bauelemente zerstören, was zu Leistungseinbußen führt. Zum Schutz vor äußeren Einflüssen, z.B. Schmutz, ist die optische Baugruppe 3 idealerweise in einer Einhausung eingebaut, in der geeignet angebrachte optische Fenster durchlässig für die Laserstrahlung A sind. Die optische Baugruppe 3 kann z.B. von Hand verstellt werden, wenn die Intensität des Laserstrahles A unter einen vorher festgelegten Wert sinkt. Auch eine elektromotorische Verstellung ist denkbar. Dann kann die Verstellung automatisch über eine programmgesteuerte Verstellung vorgenommen werden, wie sie aus dem Stand der Technik bekannt ist. Das Verfahren kann ebenfalls automatisiert werden, indem ein Sensor die Leistungsdaten des Systems überwacht und bei Bedarf die Verstellung ausführt.

Die optische Baugruppe 3 kann über das bewegliche Trägerelement 6 aus einer ersten Position in eine weitere zweite Position verstellt werden. In diesem Ausführungsbeispiel erfolgt die Verstellung in vertikaler Richtung parallel zur Oberfläche der Vorrichtung zur Ablenkung der Laserstrahlung 4, um die Position des Strahlenganges durch die Verstellung nicht zu verändern (Fig. 1 b, c). Jedoch ändert sich die Position der Auftrefffläche der Laserstrahlung A auf der Vorrichtung zur Ablenkung der Laserstrahlung 4 von der Position X' zur Position X. Aus dieser zweiten Position kann die optische Baugruppe 3 in weitere Positionen verstellt werden. Auf den optischen Bauelementen der optischen Baugruppe 3 kann so eine unbeschädigte Stelle in den Strahlengang der vom Resonator 2 erzeugten Laserstrahlung A verstellt werden. Der Strahlengang der Laserstrahlung vor der Verstellung der Baugruppe A' ist ebenfalls in Fig. 1 c dargestellt.

Die Vorrichtung zur Frequenzkonversion der Laserstrahlung 5 kann wie im zweiten Ausführungsbeispiel (Fig. 2) dargestellt außerhalb der optischen Baugruppe 3 angebracht sein und ist nicht durch das bewegliche Trägerelement 6 verstellbar. In diesem Fall werden durch die Verstellung über die Verstellvorrichtung 7 der optischen Baugruppe 3 nur deren Bauelemente, nicht die Vorrichtung zur Frequenzkonversion der Laserstrahlung 5 in ihrer Lebensdauer erhöht. Diese Anordnung erlaubt je nach Anzahl und Anordnung der optischen Bauelemente in der optischen Baugruppe 3 eine kompaktere Konstruktion der Verstellvorrichtung 7 als die im ersten Ausführungsbeispiel dargelegte. Die Vorrichtung zur Frequenzkonversion der Laserstrahlung 5 kann aber auch innerhalb der optischen Baugruppe 3 eingebaut sein und ist dann ebenfalls über die Verstellvorrichtung 7 verstellbar. Die Vorrichtung zur Ablenkung der Laserstrahlung 4 besteht aus einem Spiegel bzw. optischen Bauelementen, die den Laserstrahl A in eine Richtung ablenken. In diesem Ausführungsbeispiel erfolgt die Verstellung parallel zur Oberfläche der Vorrichtung zur Ablenkung der Laserstrahlung 4 in horizontaler und oder vertikaler Richtung (siehe Pfeildarstellung in der Zeichnung). Die Position des Strahlenganges wird durch die Verstellung nicht geändert (Fig. 2 b), die Position der Auftrefffläche der Laserstrahlung A auf der Vorrichtung zur Ablenkung der Laserstrahlung 4 wird verändert. Der Strahlengang der Laserstrahlung vor der Verstellung der Baugruppe A' ist ebenfalls in Fig. 2 b dargestellt.

Die Verstellvorrichtung 7 kann so ausgeführt sein, dass sie in vertikaler und/oder horizontaler Richtung über das Trägerelement 6 die optische Baugruppe 3 gegenüber dem Resonator 2 verstellt (Fig. 3, Pfeildarstellung). Durch Kombination von Verstellung der optischen Baugruppe 3 in vertikaler und horizontaler Richtung parallel zur Oberfläche der Vorrichtung zur Ablenkung der Laserstrahlung 4 aus einer ersten Position in weitere Positionen kann eine unbeschädigte Stelle auf der gesamten Fläche sowohl der Vorrichtung zur Ablenkung der Laserstrahlung 4 als auch der Vorrichtung zur Frequenzkonversion der Laserstrahlung 5 in den Strahlengang der vom Resonator 2 erzeugten Laserstrahlung A verstellt werden. Die Lebensdauer der optischen Bauelemente wird durch diese Anordnung gegenüber nicht verstellbaren Konstruktionen deutlich verlängert. Die Position der Auftrefffläche der Laserstrahlung A auf der Vorrichtung zur Ablenkung der Laserstrahlung 4 ändert sich durch die Verstellung von der Position X' zur Position X (Fig. 3 b), die Position des Strahlenganges wird durch die Verstellung nicht geändert. Der Strahlengang der Laserstrahlung vor der Verstellung der Baugruppe A' ist ebenfalls in Fig. 3 c dargestellt.

Fig. 4 zeigt eine Anordnung der erfindungsgemäßen Vorrichtung zur Erzeugung einer Laserstrahlung 1 mit zwei Vorrichtungen zur Ablenkung der Laserstrahlung 4.1, 4.2, die parallel angeordnet sind. Der Resonator 2 erzeugt die primäre Laserstrahlung A. Im Strahlengang liegen eine Vorrichtung zur Frequenzkonversion der Laserstrahlung 5 sowie die Vorrichtungen zur Ablenkung der Laserstrahlung 4.1, 4.2. In dieser Konfiguration mit zwei parallel angeordneten Vorrichtungen zur Ablenkung der Laserstrahlung 4.1, 4.2, z.B. zwei parallel angeordnete Spiegel, wird die primäre Laserstrahlung A so abgelenkt, dass der aus der optischen Baugruppe 3 austretende Laserstrahl A parallel zum vom Resonator 2 erzeugten Laserstrahl A verläuft. Die optische Baugruppe 3 ist fest mit einem beweglichen Trägerelement 6 verbunden und über die Verstellvorrichtung 7 in allen drei Raumrichtungen verstellbar (siehe Pfeildarstellung). Gestrichelt ist eine zweite Position der optischen Baugruppe 3' mit dem Trägerelement 6', Vorrichtung zur Frequenzkonversion 5' der Laserstrahlung A und zwei Vorrichtungen zur Ablenkung der Laserstrahlung 4.1', 4.2' als Elemente der optischen Baugruppe 3' eingezeichnet.

Die Verstellvorrichtung 7 kann ebenfalls wie im dritten Ausführungsbeispiel so ausgebildet sein, dass eine Verstellung in vertikaler Richtung möglich ist. Über die Verstellvorrichtung 7 wird die optische Baugruppe 3 mit den zwei Vorrichtungen zur Ablenkung der Laserstrahlung 4.1, 4.2 verstellt, ohne dass die Position des Strahlenganges verändert wird. Dazu wird die optische Baugruppe 3 parallel zu den Oberflächen der Vorrichtungen zur Ablenkung der Laserstrahlung 4. 1, 4.2 verstellt. Die Positionen der Auftrefffläche der Laserstrahlung A auf der Vorrichtung zur Ablenkung der Laserstrahlung 4 ändert sich durch die Verstellung. Durch Kombination von Verstellung in vertikaler und horizontaler Richtung parallel zu den Oberflächen der Vorrichtungen zur Ablenkung der Laserstrahlung 4.1, 4.2 kann eine unbeschädigte Stelle in den Strahlengang der vom Resonator 2 erzeugten Laserstrahlung A verstellt werden. Der Strahlengang der Laserstrahlung vor der Verstellung der Baugruppe A' ist ebenfalls in Fig. 4 dargestellt.

In Fig. 5 ist eine Anordnung dargestellt, bei der die verstellbare optische Baugruppe 3 innerhalb des Resonators 2 angeordnet ist. Die optische Baugruppe umfasst hier ein Trägerelement 6 und die auf dem Trägerelement 6 angeordneten Vorrichtung zur Ablenkung der Laserstrahlung A und eine Vorrichtung zur Frequenzkonversion der Laserstrahlung A. Durch die Verstellung der optischen Baugruppe 3 in eine zweite Position wird die Strahlführung der Laserstrahlung A innerhalb des Resonators nicht verändert. Auch die Richtung und Position der aus dem Resonator austretenden Laserstrahlung A wird durch die Verstellung der optischen Baugruppe nicht verändert. Es sind nach der Verstellung aber andere Bereiche der optischen Elemente 4.1, 5, der optischen Baugruppe 3 der Laserstrahlung ausgesetzt. Die Elemente der optischen Baugruppe 4.1', 5', 6' nach der Verstellung sind gestrichelt in Fig. 5 eingezeichnet. Die Verstellung der optischen Baugruppe 3 kann parallel zur Oberfläche der Vorrichtungen zur Ablenkung der Laserstrahlung 4 und/oder in vertikaler Richtung erfolgen (siehe Pfeildarstellung) und demgemäß können alle Bereiche der Oberfläche der Vorrichtung zur Ablenkung der Laserstrahlung 4.1' bestrahlt und alle Bereiche des Volumens der Vorrichtung zur Frequenzkonversion 5'der Laserstrahlung A durchstrahlt werden.

Fig. 6a zeigt ein Lasersystem bei dem ein Pumpstrahl 100 durch eine Linse 101 auf das Lasermedium 103 fokussiert wird. Der fokussierte Pumpstrahl 100 tritt durch einen für die Wellenlänge des Pumpstrahls 100 durchlässigen Resonatorspiegel 102 in den Resonator des Lasersystems ein. Im Lasermedium 103 wird durch die Pumpstrahlung 100 die kohärente Laserstrahlung 110 vorzugsweise im Wellenlängenbereich des UV-Lichts erzeugt. Der kohärente Laserstrahl 110 wird vom Lasermedium 103 zunächst durch den Güteschalter (Q-Switch) 104 geführt. Der Laserstrahl 110 gelangt dann durch einen für ausgewählte Wellenlängen durchlässigen Spiegel 107 zum Frequenzverdreifacher 106 und den Frequenzverdoppler 105. Vom zweiten Resonatorspiegel 102 wird der Strahl in den Strahlengang zurückreflektiert und am für ausgewählte Wellenlängen durchlässigen Spiegel 107 geteilt. Ein Teil der Strahlung tritt durch den für ausgewählte Wellenlängen durchlässigen Spiegel 107 hindurch und verbleibt im Resonator. Die durch nichtlineare Prozesse konvertierte Laserstrahlung wird vom für ausgewählte Wellenlängen durchlässigen Spiegel 107 separiert und aus dem Resonator ausgekoppelt. Eine weitere Ablenkung erfolgt durch den Spiegel 108.

Die verstellbare optische Baugruppe 109 umfasst in diesem Ausführungsbeispiel den Frequenzverdreifacher 106, den für ausgewählte Wellenlängen durchlässigen Spiegel 107 und den Spiegel 108 (vgl. Fig. 6b). Diese verstellbare optische Baugruppe 109 ist auf einem Trägerelement angeordnet. Durch die Verstellung des Trägerelements, die in allen drei Raumrichtungen möglich ist, wird jedes einzelne Element der verstellbaren optischen Baugruppe 109 um exakt dieselbe Distanz verschoben, wie jedes andere Element der verstellbaren optischen Baugruppe 109. Dadurch, dass die verstellbare optische Baugruppe 109 insgesamt verstellt wird, bleibt der den Resonator verlassende Laserstrahl 110 unabhängig von der Verstellung der optischen Baugruppe 109 in der gleichen Position. Teil der Baugruppe 109 kann auch ein Kristall zur Erzeugung der zweiten Harmonischen sein.

Zudem kann der Laserstrahl nach dem Spiegel 108 z.B. zur weiteren Filterung bzw. Strahlreinigung durch ein weiteres Spiegelpaar (siehe Fig. 6b) n mal erweitert werden. Auch andere optische Komponenten wie z.B. Prismen und optische Gitter können hier zum Einsatz kommen.

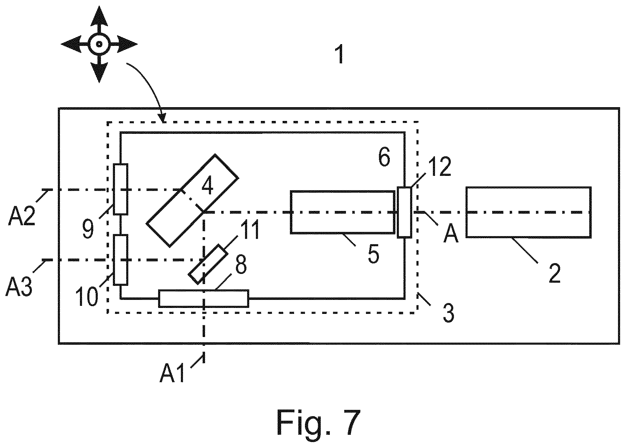

Die erfindungsgemäße Vorrichtung zur Erzeugung einer Laserstrahlung 1 (Fig.7) weist eine optische Baugruppe 3 und einen Resonator 2 auf, der die primäre Laserstrahlung A erzeugt. Die optische Baugruppe 3 weist eine Vorrichtung zur Ablenkung der Laserstrahlung 4 und eine Vorrichtung zur Frequenzkonversion der Laserstrahlung 5, welche aus mehreren frequenzkonvertierenden Kristallen bestehen kann, auf. Zudem umfasst die optische Baugruppe ein Brewster-Fenster 8, 9, 10. eine luftdichte Kammer, in deren Wänden die Auskoppel-Fenster 8, 9, 10 und das Einkoppel-Fenster 12 angeordnet sind, und in der die optischen Elemente 4, 5, 11 angeordnet sind. Beide Vorrichtungen 4, 5 liegen im Strahlengang der vom Resonator 2 erzeugten Laserstrahlung A. Die optische Baugruppe 3 ist fest mit einem beweglichen Trägerelement 6 verbunden und über die Verstellvorrichtung 7 in allen Raumrichtungen verstellbar. In einer optionalen Ausführungsform, kann das Brewster-Fenster auch ein Anti-Reflex (AR) beschichtetes Auskoppel-Fenster oder ein Auskoppel-Fenster ohne AR-Beschichtung sein. In der in Fig. 7 dargestellten Ausführungsform umfasst die Vorrichtung zur Frequenzkonversion der Laserstrahlung 5 einem Frequenzverdoppler-Kristall und einen Frequenzverdreifacher-Kristall, welche die primäre Laserstrahlung A von 1064 nm in UV-Laserstrahlung von 355 nm konvertieren. Die gemeinsam verbleibende, nicht im Frequenzverdreifacher-Kristall konvertierte Laserstrahlung von 1064 nm und 532 nm A1, A2 wird über die Fenster 8 und 9 gleichzeitig ausgekoppelt. Vorrichtung zur Ablenkung der Laserstrahlung 4 und der Spiegel 11 sind jeweils weitestgehend als hoch-transmitterende Separatorspiegel für die Wellenlängen 1064 nm bzw. 532 nm ausgeführt. Für die Wellenlänge von 355 nm sind die Vorrichtung zur Ablenkung der Laserstrahlung 4 und der Spiegel 11 dabei weitestgehend hochreflektierend. Die UV-Laserstrahlung A3 von 355 nm verlässt über das Auskoppel-Fenster 10 die in der luftdichten Kammer angeordnete optische Baugruppe 3. Die Vorrichtung zur Ablenkung der Laserstrahlung 4 und der Spiegel 11 können auch eine unterschiedliche Reflektivität für die gegebenen Wellenlängen aufweisen. Hierbei kann die Vorrichtung zur Ablenkung der Laserstrahlung 4 und der Spiegel 11 mitunter auch für alle drei Wellenlängen (1064 nm, 532 nm und 355 nm) hochreflektierend sein. Dabei verlassen die drei Wellenlängen dann gemeinsam die optische Baugruppe 3 über das Auskoppel-Fenster 10. Bei Bewegung der optischen Baugruppe 3 bleibt die Lage bzw. Ausbreitungsrichtung der ausgekoppelten UV-Laserstrahlung A3 stabil. Bei einer Auskopplung der Laserstrahlung mit den Wellenlängen 1064 nm und 532 nm über das Auskoppel-Fenster 8 ist die Vorrichtung zur Ablenkung der Laserstrahlung 4 dann für alle drei Wellenlängen (1064 nm, 532 nm und 355 nm) hochreflektierend ausgebildet.

### BEZUGSZEICHENLISTE

- 1: Vorrichtung zur Erzeugung einer Laserstrahlung
- 2: Resonator
- 3, 3': Optische Baugruppe
- 4, 4.1, 4.2, 4.1', 4.2': Vorrichtung zur Ablenkung der Laserstrahlung
- 5, 5': Vorrichtung zur Vervielfachung der Frequenz der Laserstrahlung
- 6, 6`: Trägerelement
- 7: Verstellvorrichtung
- 8, 9, 10: Auskoppel-Fenster, Brewster-Fenster
- 11: Spiegel
- 12: Einkoppel-Fenster
- 100: Pumpstrahl
- 101: Linse
- 102: Resonatorspiegel
- 103: Lasermedium
- 104: Q-Switch
- 105: Frequenzverdoppler
- 106: Frequenzverdreifacher
- 107: Für ausgewählte Wellenlängen durchlässiger Spiegel
- 108: Spiegel
- 109: Verstellbare optische Baugruppe
- 110: Laserstrahl
- A: Strahlengang der Laserstrahlung
- A': Strahlengang der Laserstrahlung vor der Verstellung der Baugruppe
- A1, A2, A3: Laserstrahlung nach Durchleitung durch die Vorrichtung zur Vervielfachung der Frequenz der Laserstrahlung
- X, X': Auftrefffläche des Laserstrahls

## Patentansprüche

1. Vorrichtung (1) zum Erzeugen einer Laserstrahlung (A) umfassend
• einen Resonator (2),
• eine optische Baugruppe (3),
eine Verstellvorrichtung (7)
wobei die optische Baugruppe (3) mehrere optische Bauelemente (4, 4.1, 4.2, 5) umfasst,
wobei die optische Baugruppe (3) eine Vorrichtung (5) zur Frequenzkonversion der Laserstrahlung (A, A') umfasst,
wobei die optische Baugruppe (3) und die Vorrichtung (5) zur Frequenzkonversion ein beweglich angeordnetes Trägerelement (6) umfassen, auf dem die optischen Bauelemente (4, 4.1, 4.2, 5) und die Vorrichtung (5) zur Frequenzkonversion angeordnet sind,
wobei ein optisches Bauelement (4, 4.1, 4.2, 5) eine Vorrichtung (4, 4.1, 4.2) zur Ablenkung der Laserstrahlung (A, A') ist,
wobei die Vorrichtung (4, 4.1, 4.2) zur Ablenkung der Laserstrahlung (A, A') der optischen Baugruppe (3) im Strahlengang der vom Resonator (2) erzeugten Laserstrahlung (A; A') angeordnet ist,
wobei die Verstellvorrichtung (7) geeignet ist die relative Position der optischen Baugruppe (3) von einer ersten Position zu einer anderen oder eine Anzahl von anderen Positionen zum Resonator (2) zu verändern,
wobei die Position des Strahlenganges der aus der optischen Baugruppe (3) in der ersten Position austretenden Laserstrahlung (A, A') durch die Verstellung der optischen Baugruppe (3) zu einer der anderen Positionen zum Resonator (2) unverändert bleibt,
wobei die optische Baugruppe (2) eine erste Vorrichtung (4.1) und eine zweite Vorrichtung (4.2) zur Ablenkung der Strahlung (A) umfasst, wobei die erste Vorrichtung und der zweite Vorrichtung aus Spiegeln, Linsen, Prismen, Gitter und deren Kombinationen bestehen.

2. Vorrichtung (1) zum Erzeugen einer Laserstrahlung (A) nach Anspruch 1 wobei die optische Baugruppe (3) eine Vorrichtung (5) zur Vervielfachung der Frequenz der Laserstrahlung (A) umfasst.

3. Vorrichtung (1) zum Erzeugen einer Laserstrahlung (A) nach einem oder mehreren der Ansprüche 1 bis 2 wobei die Verstellvorrichtung (7) geeignet ist, die optische Baugruppe (3) von einer ersten Position zu einer der anderen Positionen durch eine Translation in mindestens eine der folgenden Richtungen zu bewegen:
parallel zur Oberfläche der Vorrichtung (4, 4.1, 4.2) zur Ablenkung der Strahlung (A).
senkrecht zur Strahlebene der Vorrichtung (4, 4.1, 4.2) zur Ablenkung der Strahlung (A) und
parallel zur Strahlebene der Vorrichtung (4, 4.1, 4.2) zur Ablenkung der Strahlung (A) zu bewegen.

4. Vorrichtung (1) zum Erzeugen einer Laserstrahlung (A) nach einem oder mehreren der Ansprüche 1 bis 3 wobei die die Laserstrahlung (A) ablenkende Oberfläche der zweiten Vorrichtung (4.2) zur Ablenkung der Strahlung parallel zur die Laserstrahlung (A) ablenkenden Oberfläche der ersten Vorrichtung (4.1) zur Ablenkung der Strahlung (A) angeordnet ist.

5. Vorrichtung (1) zum Erzeugen einer Laserstrahlung (A) nach einem oder mehreren der Anspruch 4 wobei die Verstellvorrichtung (7) geeignet ist, die optische Baugruppe (3) von einer ersten Position zu einer der anderen Positionen durch eine Translation in mindestens eine der folgenden Richtungen zu bewegen:
parallel zur Strahlebene der Laserstrahlung (A)
senkrecht zur Oberfläche der zweiten Vorrichtung (4.2) zur Ablenkung der Strahlung (A) zu bewegen und
senkrecht zum Strahlengang der aus der optischen Baugruppe (3) eintretenden Laserstrahlung (A) zu bewegen.

6. Verfahren zur Verbesserung der Lebensdauer einer Vorrichtung (1) zur Erzeugung einer Laserstrahlung (A, A') bei dem
eine Bewegung einer optischen Baugruppe (3) relativ zu einem Resonator (2) von einer ersten Position in eine zweite Position erfolgt,
wobei die optische Baugruppe (3) mehrere optische Bauelemente (4, 4.1, 4.3, 5) umfasst, wobei die optische Baugruppe (3) eine Vorrichtung (5) zur Frequenzkonversion der Laserstrahlung (A, A') umfasst,
wobei durch das Verfahren der optischen Baugruppe (3) die Position der Auftrefffläche der Laserstrahlung (A, A') auf ein optisches Bauelement Bauelemente (4, 4.1, 4.3, 5) der optischen Baugruppe (3) verändert wird,
wobei die optische Baugruppe (3) auf ein beweglich angeordnetes Trägerelement (6) umfasst,
wobei ein optisches Bauelement (3) eine Vorrichtung (4, 4.1, 4.2) zur Ablenkung der Laserstrahlung (A, A') ist,
wobei die Vorrichtung zur Ablenkung der Laserstrahlung (4, 4.1, 4.2) der optischen Baugruppe (3) im Strahlengang der von einem Resonator (2) erzeugten Laserstrahlung (A, A') angeordnet ist,
wobei die optische Baugruppe (3) eine erste Vorrichtung (4.1) und eine zweite Vorrichtung (1) zur Ablenkung der Strahlung (A, A') umfasst, wobei die erste Vorrichtung und der zweite Vorrichtung aus Spiegeln, Linsen, Prismen, Gitter und deren Kombinationen bestehen, die mit der optischen Baugruppe (3) zusammen bewegt wird,
wobei die Position des Strahlenganges der aus der optischen Baugruppe (3) in der ersten Position austretenden Laserstrahlung (A, A') durch das Verfahren der optischen Baugruppe (3) zu der anderen Position zum Resonator (2) unverändert bleibt.

7. Verfahren für eine Vorrichtung (1) zur Erzeugung einer Laserstrahlung (A) nach Anspruch 6, wobei die Bewegung der optische Baugruppe (3) in mindestens eine der folgenden Richtungen erfolgt:
parallel zur Oberfläche der Vorrichtung (4, 4.1, 4.2) zur Ablenkung der Strahlung (A) senkrecht zur Strahlebene der Vorrichtung (4, 4.1, 4.2) zur Ablenkung der Strahlung (A) und
parallel zur Strahlebene der Vorrichtung (4, 4.1, 4.2) zur Ablenkung der Strahlung (A).

8. Verfahren für eine Vorrichtung (1) zur Erzeugung einer Laserstrahlung (A) nach einem oder mehreren der Ansprüche 6 oder 7, wobei die optische Baugruppe (3) von einer ersten Position zu einer der anderen Positionen in mindestens eine der folgenden Richtungen erfolgt:
parallel zur Strahlebene der Laserstrahlung (A),
senkrecht zur Oberfläche der Vorrichtung (4, 4.1, 4.2) zur Ablenkung der Strahlung (A).
senkrecht zum Strahlengang der aus der optischen Baugruppe (3) eintretenden Laserstrahlung (A).

## Claims

1. Device (1) for generating a laser radiation (A) comprising
• a resonator (2),
• an optical assembly (3),
• an adjustment device (7),
wherein the optical assembly (3) comprises a plurality of optical components (4, 4.1, 4.2, 5),
wherein the optical assembly (3) comprises a device (5) for frequency conversion of the laser radiation (A, A'),
wherein the optical assembly (3) and the device (5) for frequency conversion comprise a movably arranged carrier element (6) on which the optical components (4, 4.1, 4.2, 5) and the device (5) for frequency conversion are arranged,
wherein an optical component (4, 4.1, 4.2, 5) is a device (4, 4.1, 4.2) for deflecting the laser radiation (A, A'),
wherein the device (4, 4.1, 4.2) for deflecting the laser radiation (A, A') of the optical assembly (3) is arranged in the beam path of the laser radiation (A; A') generated by the resonator (2),
wherein the adjustment device (7) is adapted to change the relative position of the optical assembly (3) from a first position to another or a number of other positions to the resonator (2),
wherein the position of the beam path of the laser radiation (A, A') exiting from the optical assembly (3) in the first position remains unchanged by the displacement of the optical assembly (3) to one of the other positions to the resonator (2),
wherein the optical assembly (2) comprises a first device (4.1) and a second device (4.2) for deflecting the radiation (A), wherein the first device and the second device consists of mirrors, lenses, prisms, gratings and combinations thereof.

2. Device (1) for generating a laser radiation (A) according to claim 1,
**wherein**
the optical assembly (3) comprises a device (5) for multiplying the frequency of the laser radiation (A).

3. Device (1) for generating a laser radiation (A) according to one or more of claims 1 to 2,
**wherein**
the adjustment device (7) is adapted to move the optical assembly (3) from a first position to one of the other positions by a translation in at least one of the following directions:
parallel to the surface of the device (4, 4.1, 4.2) to deflect the radiation (A),
perpendicular to the beam plane of the device (4, 4.1, 4.2) for deflecting the radiation (A)
and
parallel to the beam plane of the device (4, 4.1, 4.2) to deflect the radiation (A).

4. Device (1) for generating a laser radiation (A) according to one or more of claims 1 to 3,
**wherein**
the surface deflecting the laser radiation (A) of the second device (4.2) for deflecting the radiation is arranged parallel to the surface deflecting the laser radiation (A) of the first device (4.1) for deflecting the radiation (A).

5. Device (1) for generating a laser radiation (A) according to one or more of claim 4,
**wherein**
the displacement device (7) is adapted to move the optical assembly (3) from a first position to one of the other positions by a translation in at least one of the following directions:
parallel to the beam plane of the laser radiation (A)
perpendicularly to the surface of the second device (4.2) for deflecting the radiation (A) and
perpendicular to the beam path of the laser radiation (A) entering from the optical assembly (3).

6. Method for improving the service life of a device (1) for generating a laser beam (A, A'),
wherein an optical assembly (3) is moved relative to a resonator (2) from a first position to a second position,
wherein the optical assembly (3) comprises a plurality of optical components (4, 4.1, 4.3, 5),
wherein the optical assembly (3) comprises a device (5) for frequency conversion of the laser radiation (A, A'),
wherein the position of the incident surface of the laser radiation (A, A') on an optical component (4, 4.1, 4.3, 5) of the optical assembly (3) is changed by the process of the optical assembly (3),
wherein the optical assembly (3) comprises a movably arranged carrier element (6),
wherein an optical component (3) is a device (4, 4.1, 4.2) for deflecting the laser radiation (A, A'),
wherein the device for deflecting the laser radiation (4, 4.1, 4.2) of the optical assembly (3) is arranged in the beam path of the laser radiation (A, A') generated by a resonator (2),
wherein the optical assembly (3) comprises a first device (4.1) and a second device (1) for deflecting the radiation (A, A'), wherein the first device and the second device consists of mirrors, lenses, prisms, gratings and combinations thereof, which is moved together with the optical assembly (3),
wherein the position of the beam path of the laser radiation (A, A') exiting from the optical assembly (3) in the first position remains unchanged by the movement of the optical assembly (3) to the other position to the resonator (2).

7. Method for a device (1) for generating a laser radiation (A) according to claim 6,
wherein
the movement of the optical assembly (3) proceeds in at least one of the following directions:
parallel to the surface of the device (4, 4.1, 4.2) for deflecting the radiation (A)
perpendicular to the beam plane of the device (4, 4.1, 4.2) for deflecting the radiation (A) and
parallel to the beam plane of the device (4, 4.1, 4.2) for deflecting the radiation (A).

8. Method for a device (1) for generating a laser radiation (A) according to claim 6 or 7,
wherein
the optical assembly (3) proceeds from a first position to one of the other positions in at least one of the following directions:
parallel to the beam plane of the laser radiation (A),
perpendicular to the surface of the device (4, 4.1, 4.2) for deflecting the radiation (A) and
perpendicular to the beam path of the laser radiation (A) entering from the optical assembly (3).

## Revendications

1. Dispositif (1) pour la génération d'un rayonnement laser (A) comprenant
• un résonateur (2),
• un ensemble optique (3),
• un dispositif de réglage (7)
dans lequel l'ensemble optique (3) comprend une pluralité de composants optiques (4, 4.1, 4.2, 5),
dans lequel l'ensemble optique (3) comprend un dispositif (5) de conversion de fréquence du rayonnement laser (A, A'),
dans lequel l'ensemble optique (3) et le dispositif (5) de conversion de fréquence comprennent un élément de support disposé de manière mobile (6) sur lequel les composants optiques (4, 4.1, 4.2, 5) et le dispositif (5) de conversion de fréquence sont disposés,
dans lequel un composant optique (4, 4.1, 4.2, 5) est un dispositif (4, 4.1, 4.2) de déviation du rayonnement laser (A, A'),
dans lequel le dispositif (4, 4.1, 4.2) de déviation du rayonnement laser (A, A') de l'ensemble optique (3) est disposé dans le trajet du faisceau du rayonnement laser (A ; A') généré par le résonateur (2),
dans lequel le dispositif de réglage (7) est adapté pour changer la position relative de l'ensemble optique (3) d'une première position à une autre ou plusieurs autres positions au résonateur (2),
dans lequel la position du trajet du faisceau du rayonnement laser (A, A') sortant de l'ensemble optique (3) dans la première position reste inchangée par le réglage de l'ensemble optique (3) à l'une des autres positions par rapport au résonateur (2), dans lequel l'ensemble optique (2) comprend un premier dispositif (4.1) et un second dispositif (4.2) de déviation du rayonnement (A), dans lequel le premier dispositif et le second dispositif sont constitués de miroirs, lentilles, prismes, grilles et leurs combinaisons.

2. Dispositif (1) pour la génération d'un rayonnement laser (A) selon la revendication 1, dans lequel
l'ensemble optique (3) comprend un dispositif (5) pour multiplier la fréquence du rayonnement laser (A).

3. Dispositif (1) pour la génération d'un rayonnement laser (A) selon une ou plusieurs des revendications 1 à 2,
dans lequel
le dispositif de réglage (7) est adapté pour déplacer l'ensemble optique (3) d'une première position à l'une des autres positions par translation dans au moins l'une des directions suivantes :
parallèlement à la surface du dispositif (4, 4.1, 4.2) de déviation du rayonnement (A)
perpendiculairement au plan du faisceau du dispositif (4, 4.1, 4.2) de déviation du rayonnement (A) et
pour le déplacer parallèlement au plan du faisceau du dispositif (4, 4.1, 4.2) de déviation du rayonnement (A).

4. Dispositif (1) pour la génération d'un rayonnement laser (A) selon une ou plusieurs des revendications 1 à 3
dans lequel
la surface du second dispositif (4.2) de déviation du rayonnement qui dévie le rayonnement laser (A) est disposée parallèlement à la surface du premier dispositif (4.1) de déviation du rayonnement (A) qui dévie le rayonnement laser (A).

5. Dispositif (1) pour la génération d'un rayonnement laser (A) selon une ou plusieurs des revendications 4,
dans lequel
le dispositif de réglage (7) est adapté pour déplacer l'ensemble optique (3) d'une première position à l'une des autres positions par une translation dans au moins l'une des directions suivantes :
pour le déplacer parallèlement au plan du faisceau du rayonnement laser (A) perpendiculairement à la surface du second dispositif (4.2) de déviation du rayonnement (A) et pour le déplacer perpendiculairement au trajet du faisceau du rayonnement laser (A) entrant depuis l'ensemble optique (3).

6. Procédé pour améliorer la durée de vie d'un dispositif (1) pour la génération d'un rayonnement laser (A, A'), dans lequel un ensemble optique (3) est déplacé par rapport à un résonateur (2) d'une première position à une seconde position,
dans lequel l'ensemble optique (3) comprend une pluralité de composants optiques (4, 4.1, 4.3, 5), dans lequel l'ensemble optique (3) comprend un dispositif (5) de conversion de fréquence du rayonnement laser (A, A'),
dans lequel la position de la surface d'impact du rayonnement laser (A, A') sur un composant optique (4, 4.1, 4.3, 5) de l'ensemble optique (3) est modifiée par le déplacement de l'ensemble optique (3),
dans lequel l'ensemble optique (3) comprend un élément de support disposé de manière mobile (6),
dans lequel un composant optique (3) est un dispositif (4, 4.1, 4.2) de déviation du rayonnement laser (A, A'),
dans lequel le dispositif de déviation du rayonnement laser (4, 4.1, 4.2) de l'ensemble optique (3) est disposé dans le trajet du faisceau du rayonnement laser (A, A') généré par un résonateur (2),
dans lequel l'ensemble optique (3) comprend un premier dispositif (4.1) et un second dispositif (1) de déviation du rayonnement (A, A'), dans lequel le premier dispositif et le second dispositif consistent en des miroirs, des lentilles, des prismes, des grilles et leurs combinaisons, qui est déplacé avec l'ensemble optique (3),
dans lequel la position du trajet du faisceau du rayonnement laser (A, A') sortant de l'ensemble optique (3) dans la première position reste inchangée pendant le déplacement de l'ensemble optique (3) vers l'autre position vers le résonateur (2).

7. Procédé pour un dispositif (1) pour la génération d'un rayonnement laser (A) selon la revendication 6,
dans lequel
l'ensemble optique (3) est déplacé dans au moins l'une des directions suivantes :
parallèlement à la surface du dispositif (4, 4.1, 4.2) de déviation du rayonnement (A)
perpendiculairement au plan du faisceau du dispositif (4, 4.1, 4.2) de déviation du rayonnement (A) et
parallèlement au plan du faisceau du dispositif (4, 4.1, 4.2) de déviation du rayonnement (A).

8. Procédé pour un dispositif (1) pour la génération d'un rayonnement laser (A) selon une ou plusieurs des revendications 6 ou 7,
dans lequel
l'ensemble optique (3) se déplace d'une première position à l'une des autres positions dans au moins l'une des directions suivantes :
parallèlement au plan du faisceau du rayonnement laser (A),
perpendiculairement à la surface du dispositif (4, 4.1, 4.2) de déviation du rayonnement (A),
perpendiculairement au trajet du faisceau du rayonnement laser (A) entrant depuis l'ensemble optique (3).
